# EUROPEAN PATENT APPLICATION

(11) **EP 4 813 738 A1**
(43) Date of publication of application: **30.09.2026**
(21) Application number: 24878562.8
(22) Date of filing: 03.07.2024
(51) Int. Cl.: B60N 2/22, B64D 11/06

(54) **SEAT BACKREST ADJUSTING APPARATUS AND SEAT**

(30) Priority: 20.10.2023 CN 202311372633
(71) Applicant: Guizhou Huayang Auto Parts Co., Ltd., Guiyang, Guizhou 550009 (CN)
(72) Inventor: WANG, Jun, Guiyang, Guizhou 550009 (CN); ZHENG, Ying, Guiyang, Guizhou 550009 (CN); XIONG, Peng, Guiyang, Guizhou 550009 (CN); LI, Hangyu, Guiyang, Guizhou 550009 (CN); HE, Zhengyuan, Guiyang, Guizhou 550009 (CN)
(74) Representative: Metida
(86) International application number: PCT/CN2024/103455
(87) International publication number: WO 2025/081909

(57) **Abstract**

Provided is a seat backrest adjusting device, including a mounting bracket (1), a guiding assembly (2), a limiting member (3), and a transmission assembly (4), where the mounting bracket (1) is provided with a sliding trajectory through-slot (111), the sliding trajectory through-slot (111) is of an arc-shaped trajectory configuration, the guiding assembly (2) includes a guiding member (21) and a lock catch (22), the guiding member (21) includes a main body portion (211) and a guiding portion (212), the guiding portion (212) is connected to the main body portion (211), the guiding portion (212) is connected to the sliding trajectory through-slot (111), the lock catch (22) is connected to the main body portion (211), the limiting member (3) includes a limiting portion (31) and a connecting shaft (32), the limiting portion (31) is connected to the connecting shaft (32), and the transmission assembly (4) includes a transmission screw **(41)** and a transmission nut (42). The seat backrest adjusting device enables a motion trajectory of the lock catch to fit an arc-shaped motion trajectory of a vehicle seat backrest, thereby facilitating a reduction in the size of a relief slot required in an interior trim of a vehicle and improving the aesthetic appearance of the interior trim.

## Description

### TECHNICAL FIELD

The present disclosure relates to the technical field of vehicle seats, and in particular to a seat backrest adjusting device and a seat.

### BACKGROUND

In the prior art, an adjusting device including a seat backrest lock and a backrest latch bolt cooperating with each other has a complex structure, occupies a large space, and is heavy in weight. It requires a large relief slot to be provided in the interior trim of a vehicle, imposing high processing requirements on the interior trim and seriously compromising the aesthetic appearance of the interior trim.

### SUMMARY

Aiming to solve at least one of the technical problems existing in the prior art, the present disclosure provides a seat backrest adjusting device and a seat. The seat backrest adjusting device is capable of fitting a motion trajectory of a vehicle seat backrest, so as to facilitate reducing the required size of a relief slot in an interior trim of a vehicle and improve the aesthetic appearance of the interior trim.

In order to achieve the above objective, the present disclosure provides a seat backrest adjusting device, including a mounting bracket, a guiding assembly, a limiting member, and a transmission assembly, where the mounting bracket is provided with a sliding trajectory through-slot passing through the mounting bracket; the guiding assembly includes a guiding member and a lock catch, the guiding member includes a main body portion and a guiding portion, the guiding portion is fixedly connected to the main body portion, the guiding portion is slidably connected to the sliding trajectory through-slot, the guiding portion is provided with a first through-hole, the lock catch is connected to the main body portion, and the lock catch is provided with a connecting hole; the limiting member includes a limiting portion and a connecting shaft, the connecting shaft passes through the first through-hole and the connecting hole, the limiting portion is connected to the connecting shaft and is located on a side of the mounting bracket facing away from the main body portion; the transmission assembly includes a transmission screw and a transmission nut, the transmission nut is movably connected to the lock catch and is provided with a transmission threaded hole, the transmission screw is threadedly connected to the transmission nut via the transmission threaded hole; and the transmission screw is configured to rotate about an axis of the transmission screw to drive the transmission nut to move along the transmission screw, whereby the lock catch is driven to move, and the guiding portion slides along the sliding trajectory through-slot.

In some implementations, the sliding trajectory through-slot is of an arc-shaped trajectory configuration.

In some implementations, an inner wall of the connecting hole is provided with an internal thread; the connecting shaft includes a first shaft segment and a second shaft segment, a diameter of the first shaft segment is greater than a diameter of the second shaft segment, the first shaft segment is connected to the limiting portion, and passes through the first through-hole, the second shaft segment is provided with an external thread engaging with the internal thread, and the second shaft segment is connected to an end of the first shaft segment facing away from the limiting portion and is threadedly connected to the connecting hole.

In some implementations, the limiting portion is of a disk-shaped configuration, and a diameter of the limiting portion is greater than a width of the sliding trajectory through-slot.

In some implementations, the sliding trajectory through-slot comprises a first inner wall and a second inner wall arranged opposite to each other, the guiding portion comprises a first limiting surface and a second limiting surface arranged opposite to each other; and in response to that the guiding portion slides along the sliding trajectory through-slot, the first limiting surface abuts against the first inner wall to restrict rotation of the guiding portion, or the second limiting surface abuts against the second inner wall to restrict rotation of the guiding portion.

In some implementations, the first limiting surface is configured as a flat surface, the second limiting surface is configured as a flat surface, and the first limiting surface and the second limiting surface are parallel to each other.

In some implementations, the guiding portion further comprises a first arc-shaped transition surface and a second arc-shaped transition surface, and two ends of the first limiting surface are respectively connected to two ends of the second limiting surface via the first arc-shaped transition surface and the second arc-shaped transition surface.

In some implementations, the lock catch includes a base and a latching ring; the base is provided with an accommodating groove; the transmission nut is disposed within the accommodating groove, the base is provided with a second through-hole extending through the base and communicating with the accommodating groove, a diameter of the second through-hole is greater than an outer diameter of the transmission screw, the transmission screw passes through the base via the second through-holes, the guiding member is connected to an outer wall of the accommodating groove, and the latching ring is connected to an outer wall at an end of the accommodating groove facing away from the guiding member.

In some implementations, the accommodating groove includes a bottom wall, a first side wall connected to the bottom wall, and a second side wall connected to the bottom wall, and the second through-hole passes through the first side wall and the second side wall arranged opposite to each other; and two opposite ends of the transmission nut in an axial direction of the transmission threaded hole are each provided with an arc-shaped end surface, the two arc-shaped end surfaces respectively abut against the first side wall and the second side wall, and the transmission nut comprises a third limiting surface opposite to the bottom wall and configured to restrict rotation of the transmission nut about the axial direction of the transmission threaded hole.

In some implementations, the seat backrest adjusting device further includes an elastic member, where the elastic member is disposed within the accommodating groove, and two ends of the elastic member are respectively connected to an inner wall of the accommodating groove and an outer wall of the transmission nut.

The present disclosure further provides a seat, and the seat includes any of the above seat backrest adjusting device.

Compared with the prior art, the seat backrest adjusting device provided by the embodiments of the present disclosure has the following beneficial effects. (1) Based on the technical solution, the sliding trajectory through-slot matching the shape of a motion trajectory of a vehicle seat backrest is provided to define a motion trajectory of the guiding portion, such that the motion trajectory of the guiding portion can fit the motion trajectory of the vehicle seat backrest. When the transmission screw drives the transmission nut to move, the lock catch drives the guiding member to move. Since the lock catch and the transmission nut are movably connected and the lock catch is connected to the main body portion, the guiding portion can define the motion trajectory of the lock catch via the main body portion, such that the motion trajectory of the lock catch can fit the motion trajectory of the guiding portion along the sliding trajectory through-slot. Accordingly, the motion trajectory of the lock catch can fit the motion trajectory of the vehicle seat backrest. The design helps to reduce the size of a relief slot required in an interior trim of a vehicle and improve the aesthetic appearance of the interior trim.

(2) The transmission assembly drives the guiding assembly and the limiting member to slide along the sliding trajectory through-slot of the mounting bracket, thereby driving the seat backrest to slide and thus adjusting the position of the seat backrest. The entire structure is simple and compact, with light weight and small volume, reducing occupied space, having little impact on the interior trim, and improving space utilization.

(3) The limiting member can limit the guiding portion to ensure that the guiding portion can move within the sliding trajectory through-slot, thereby improving the stability of the sliding connection between the guiding portion and the sliding trajectory through-slot. Furthermore, the seat backrest adjusting device provided by the present disclosure can be adapted to a wider range of applications merely by making a slight modification to other backrest mating members on the vehicle seat backrest that are configured to be connected to the seat backrest adjusting device provided by the present disclosure.

### BRIEF DESCRIPTION OF THE DRAWINGS

FIG. 1 is a schematic structural view of a seat backrest adjusting device according to an embodiment of the present disclosure;
FIG. 2 is an exploded view of a seat backrest adjusting device according to an embodiment of the present disclosure;
FIG. 3 is a schematic structural view of a mounting bracket according to an embodiment of the present disclosure;
FIG. 4 is a schematic structural view of a limiting member according to an embodiment of the present disclosure;
FIG. 5 is a schematic structural view of a guiding member at a first angle according to an embodiment of the present disclosure;
FIG. 6 is a schematic structural view of the guiding member at a second angle according to the embodiment of the present disclosure;
FIG. 7 is a schematic structural view of a lock catch according to an embodiment of the present disclosure;
FIG. 8 is a schematic structural view of a transmission nut according to an embodiment of the present disclosure; and
FIG. 9 is a schematic structural view of a protective sleeve according to an embodiment of the present disclosure.

Reference Numerals: 1. mounting bracket; 11, base plate; 12, first side plate; 13, second side plate; 14, third side plate; 15, fourth side plate; 110, protective space; 111, sliding trajectory through-slot; 121, third through-hole; 1111, first inner wall; and 1112, second inner wall;
2, guiding assembly; 21, guiding member; 22, lock catch; 211, main body portion; 212, guiding portion; 213, anti-rotation portion; 2120, first through-hole; 2121, first limiting surface; 2122, second limiting surface; 2123, first arc-shaped transition surface; 2124, second arc-shaped transition surface; 221, base; 222, latching ring; 2210, accommodating groove; 2211, bottom wall; 2212, first side wall; 2213, second side wall; 2214, third side wall; 2215, fourth side wall; 2216, second through-hole; and 22141, connecting hole;
3, limiting member; 31, limiting portion; 32, connecting shaft; 321, first shaft segment; and 322, second shaft segment;
4, transmission assembly; 41, transmission screw; 42, transmission nut; 421, transmission threaded hole; 422, arc-shaped end surface; and 423, third limiting surface;
5, washer;
6, drive motor;
7, elastic member; and
8, protective sleeve; 81, sleeve body; 82, spacer side plate; and 811, fourth through-hole.

### DETAILED DESCRIPTION

The specific implementations of the present disclosure are described in more detail below with reference to the drawings and embodiments. The following embodiments are intended to illustrate the present disclosure, but not to limit the scope of the present disclosure.

It should be understood that in the description of the present disclosure, terms such as "central", "longitudinal", "transverse", "length", "width", "thickness", "upper", "lower", "front", "rear", "left", "right" "vertical", "horizontal", "top", "bottom", "inside", and "outside" indicate the orientation or position relationships based on the drawings. They are merely intended to facilitate and simplify the description of the present disclosure, rather than to indicate or imply that the mentioned device or components must have a specific orientation or must be constructed and operated in a specific orientation. Therefore, these terms should not be construed as a limitation to the present disclosure.

In addition, the terms such as "first" and "second" are used only for descriptive purposes, and should not be construed as indicating or implying relative importance or implying the number of indicated technical features. Thus, features defined with "first" and "second" may explicitly or implicitly include one or more of the features.

In the present disclosure, unless otherwise clearly specified, the terms such as "installation", "interconnection", "connection", "fixing" and variants thereof are intended to be understood in a broad sense. For example, the "connection" may be a fixed connection, a removable connection, or an integral connection; may be a mechanical connection or an electrical connection; may be a direct connection or an indirect connection using a medium; and may be communication or interaction between two elements. Those of ordinary skill in the art may understand specific meanings of the above terms in the present disclosure based on a specific situation.

In the present disclosure, unless otherwise expressly specified, when it is described that a first feature is "above" or "under" a second feature, it may indicate that the first feature is in direct contact with the second feature, or that the first feature and the second feature are not in direct contact with each other but are in contact via another feature between them. In addition, when it is described that a first feature is "over", "above", and "on" a second feature, it may indicate that the first feature is directly above and diagonally above the second feature, or simply indicate that the height of the first feature is greater than that of the second feature. When it is described that a first feature is "under", "beneath", and "below" the second feature, it may indicate that the first feature is directly under or obliquely under the second feature, or simply indicate that the horizontal height of the first feature is smaller than that of the second feature.

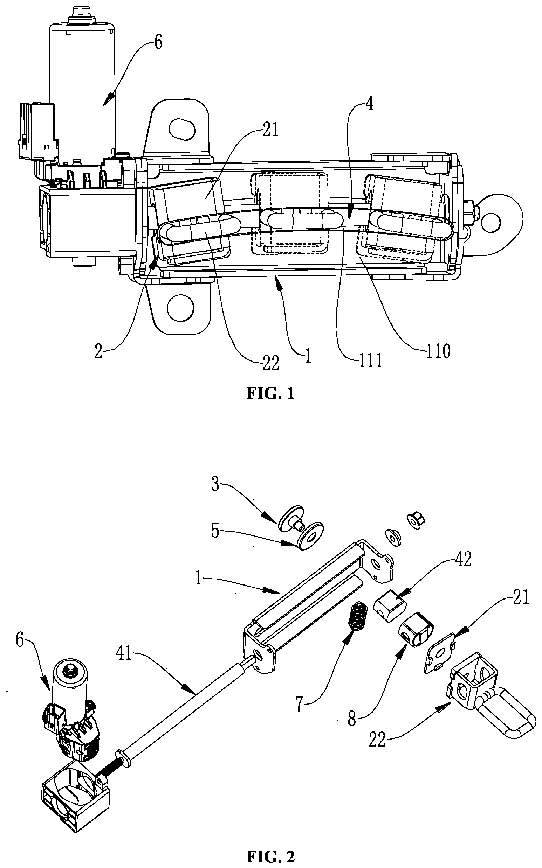

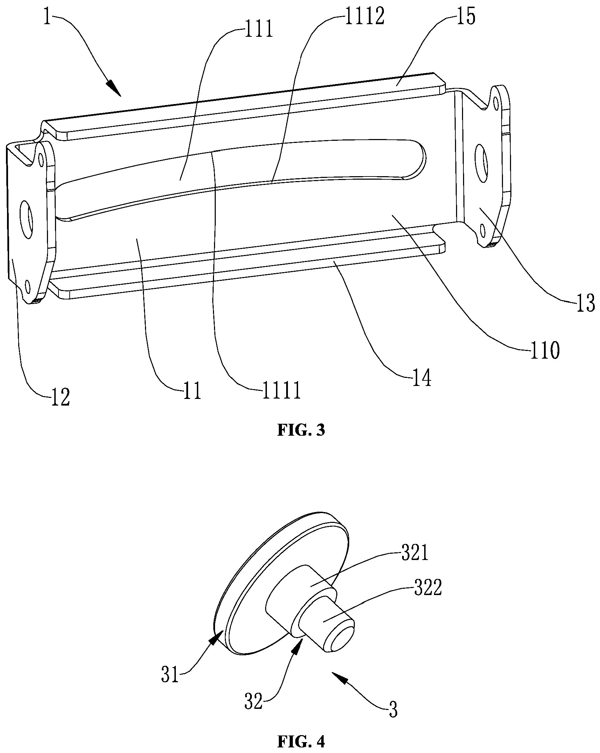

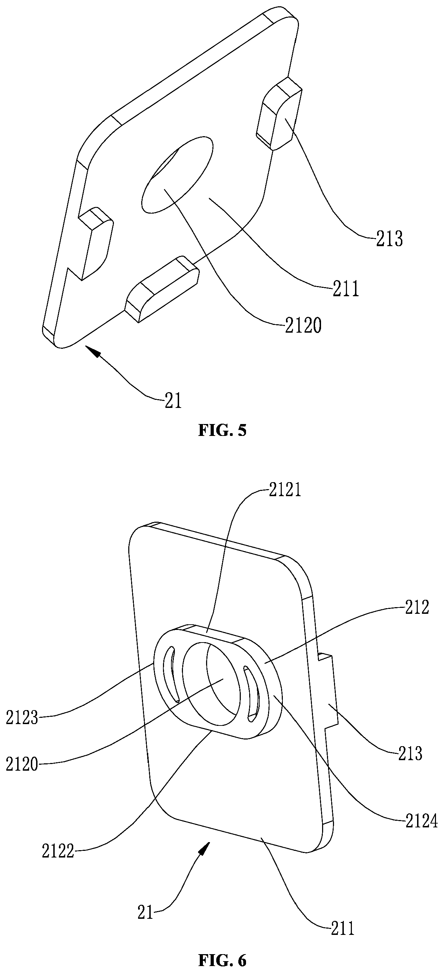

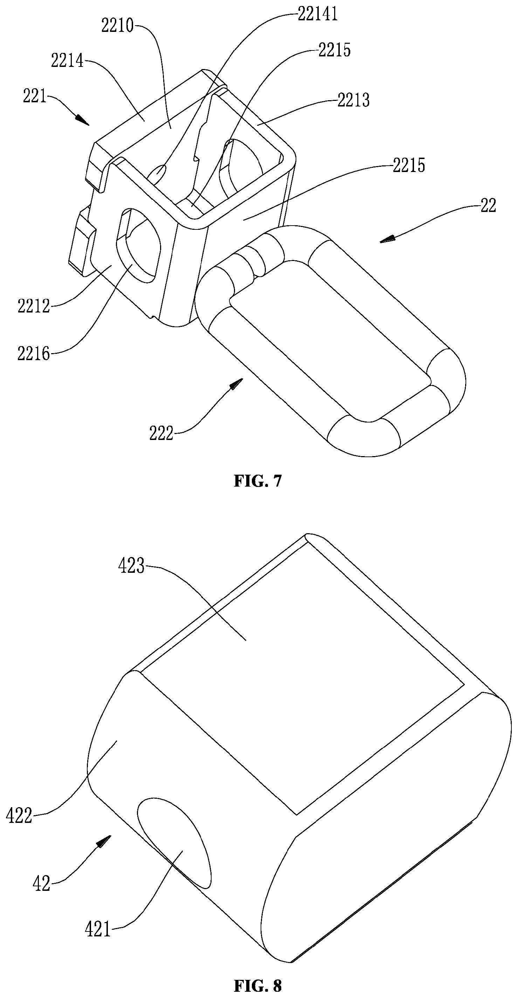

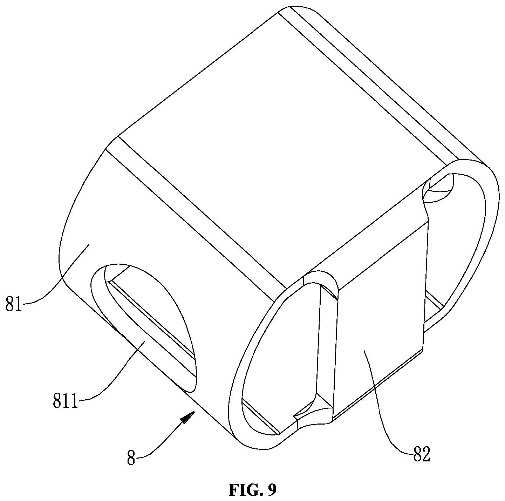

As shown in FIGS. 1 to 9, preferably, a seat backrest adjusting device according to an embodiment of the present disclosure includes a mounting bracket 1, a guiding assembly 2, a limiting member 3, and a transmission assembly 4. The mounting bracket 1 is provided with a sliding trajectory through-slot 111 passing though the mounting bracket 1. The guiding assembly 2 includes a guiding member 21 and a lock catch 22. The guiding member 21 includes a main body portion 211 and a guiding portion 212. The guiding portion 212 is fixedly connected to the main body portion 211, and the guiding portion 212 is slidably connected to the sliding trajectory through-slot 111. The guiding portion 212 is provided with a first through-hole 2120. The lock catch 22 is connected to the main body portion 211, and is provided with a connecting hole 22141. The limiting member 3 includes a limiting portion 31 and a connecting shaft 32. The connecting shaft 32 passes through the first through-hole 2120 and the connecting hole 22141. The limiting portion 31 is connected to the connecting shaft 32, and is located on a side of the mounting bracket 1 facing away from the main body portion 211. The transmission assembly 4 includes a transmission screw 41 and a transmission nut 42. The transmission nut 42 is movably connected to the lock catch 22, and is provided with a transmission threaded hole 421. The transmission screw is threadedly connected to the transmission nut 42 via the transmission threaded hole 421. The transmission screw 41 is configured to rotate about an axis of the transmission screw 41 to drive the transmission nut 42 to move along the transmission screw 41, so as to drive the lock catch 22 to move, thereby allowing the guiding portion 212 to slide along the sliding trajectory through-slot 111.

Based on the technical solution, the sliding trajectory through-slot matching the shape of a motion trajectory of a vehicle seat backrest is provided to define a motion trajectory of the guiding portion 212, such that the motion trajectory of the guiding portion 212 can fit the motion trajectory of the vehicle seat backrest. When the transmission screw 41 drives the transmission nut 42 to move, the lock catch 22 drives the guiding member 21 to move. Since the lock catch 22 and the transmission nut 42 are movably connected, and the lock catch 22 is connected to the main body portion 211, the guiding portion 212 can define the motion trajectory of the lock catch 22 via the main body portion 211, such that the motion trajectory of the lock catch 22 can fit the motion trajectory of the guiding portion 212 along the sliding trajectory through-slot 111. Accordingly, the motion trajectory of the lock catch 22 can fit the motion trajectory of the vehicle seat backrest. The design helps to reduce the required size of a relief slot in an interior trim of a vehicle and improve the aesthetic appearance of the interior trim. Meanwhile, the transmission assembly 4 drives the guiding assembly 2 and the limiting member 3 to slide along the sliding trajectory through-slot 111 of the mounting bracket 1, thereby driving the seat backrest to slide and thus adjusting the position of the seat backrest. The entire structure is simple and compact, with light weight and small volume, reducing occupied space, having little impact on the interior trim, and improving space utilization. Moreover, the limiting member 3 can limit the guiding portion 212 to ensure that the guiding portion 212 can move within the sliding trajectory through-slot 111, thereby improving the stability of the sliding connection between the guiding portion 212 and the sliding trajectory through-slot 111. Furthermore, the seat backrest adjusting device provided by the present disclosure can be adapted to a wider range of applications merely by making a slight modification to other backrest mating members on the vehicle seat backrest that are configured to be connected to the seat backrest adjusting device provided by the present disclosure.

In some implementations, the sliding trajectory through-slot 111 is of an arc-shaped trajectory configuration. Conventional seat backrest adjusting devices in the prior art mostly adopt a linear trajectory configuration, which fail to fit the arc-shaped motion trajectory of the vehicle seat backrest, and thus a large-sized relief slot needs to be provided in the interior trim, seriously compromising the aesthetic appearance of the interior trim. The sliding trajectory through-slot 111 with an arc-shaped trajectory configuration can fit the arc-shaped motion trajectory of the vehicle seat backrest, thereby reducing the size of the relief slot of the vehicle seat backrest and reducing the impact on the interior trim.

Optionally, the guiding assembly 2 and/or the limiting member 3 can be connected to other mating members of the vehicle seat backrest.

In this embodiment, the main body portion 211 is of a plate-shaped structure with a thickness.

In this embodiment, the transmission nut 42 is movably connected to the lock catch 22 by means of abutting connection.

In some other implementations, the transmission nut may also be movably connected to the lock catch 22 by other connection means such as hinged connection or sliding connection, which are not limited herein.

Specifically, the arc-shaped trajectory configuration of the sliding trajectory through-slot 111 fits the motion trajectory of the backrest lock.

An inner wall of the connecting hole 22141 is provided with an internal thread. The connecting shaft 32 includes a first shaft segment 321 and a second shaft segment 322. A diameter of the first shaft segment 321 is greater than a diameter of the second shaft segment 322. The first shaft segment 321 is connected to the limiting portion 31 and passes through the first through-hole 2120. The second shaft segment 322 is provided with an external thread engaging with the internal thread. The second shaft segment 322 is connected to an end of the first shaft segment 321 facing away from the limiting portion 31 and is threadedly connected to the connecting hole 22141.

A small clearance fit or transition fit is provided between the first shaft segment 321 and the first through-hole 2120, so as to ensure the integrity between the limiting member 3 and the guiding assembly 2.

The threaded connection between the limiting member 3 and the guiding assembly 2 has the advantages of being easy to assemble and disassemble.

The limiting portion 31 is of a disc-shaped configuration, and a diameter of the limiting portion 31 is greater than a width of the sliding trajectory through-slot 111.

The limiting portion 31 with a larger diameter is provided to prevent the guiding assembly 2 from disengaging from the sliding trajectory through-slot 111 in a direction away from the limiting portion 31. This can ensure the connection stability between the guiding assembly 2 and the mounting bracket 1, such that the guiding portion 212 can be located within the sliding trajectory through-slot 111 and cannot disengage from the sliding trajectory through-slot 111, thereby improving the stability of the sliding connection between the guiding portion 212 and the sliding trajectory through-slot 111. Accordingly, this can ensure that the connecting shaft 32 and the guiding portion 212 are constrained to move only along the trajectory defined by the sliding trajectory through-slot 111, such that the motion trajectory of the lock catch 22 can better fit the motion trajectory defined by the sliding trajectory through-slot 111. Moreover, the limiting portion 31 with a larger diameter can also ensure that the overall structure can withstand a relatively great impact.

The mounting bracket 1 includes a base plate 11, and the base plate 11 is provided with the sliding trajectory through-slot 111. The limiting portion 31 abuts against one side of the base plate 11, and the main body portion 211 abuts against another side of the base plate 11. The limiting portion 31 and the main body portion 211 respectively abut against the two sides of the base plate 11 to accurately define the position of the guiding portion 212. This can further ensure that the guiding portion 212 is located within the sliding trajectory through-slot 111 and does not disengage from the sliding trajectory through-slot 111, thereby improving the stability of the sliding connection between the guiding portion 212 and the sliding trajectory through-slot 111.

The seat backrest adjusting device further includes a washer 5. The washer 5 is sleeved on the first shaft segment 321, and is located between the limiting portion 31 and the mounting bracket. The provision of the washer 5 can reduce friction between the limiting portion 31 and the mounting bracket, and thus reduce abnormal friction-induced noise.

The mounting bracket further includes a first side plate 12, a second side plate 13, a third side plate 14, and a fourth side plate 15 that are all connected to the base plate 11. The first side plate 12, the second side plate 13, the third side plate 14, and the fourth side plate 15 form a protective space. The guiding member 21 and the lock catch 22 are disposed in the protective space 110. The provision of the protective space 110 can shield, conceal, and protect the guiding member 21 and the lock catch 22.

The first side plate 12 and the second side plate 13 are arranged opposite to each other, and are each provided with a third through-hole 121 for the transmission screw 41 to pass through.

Optionally, the seat backrest adjusting device provided by the present disclosure may be driven manually or electrically.

In this embodiment, the seat backrest adjusting device is electrically driven, and the seat backrest adjusting device further includes a drive motor 6. The drive motor 6 is connected to the transmission screw 41. The transmission screw 41 and the transmission nut 42 may be provided with conventional threads, or may be provided with self-locking threads. The drive motor 6 drives the transmission screw 41 to rotate, and the transmission screw 41 pushes the transmission nut 42 to move, and the transmission nut 42 drives the lock catch 22 to move. Under the combined action of the sliding trajectory through-slot 111, the guiding portion 212, and the connecting shaft 32, the lock catch 22 moves along a trajectory that fits the sliding trajectory through-slot 111 so as to match the motion trajectory of the backrest lock. This can reduce the width of the tolerance slot for the backrest lock, shrink the motion envelope space of the vehicle body side panel, and improve the aesthetic appearance.

In some other implementations, the seat backrest adjusting device is manually driven. The transmission screw 41 and the transmission nut 42 are provided with non-self-locking threads. When the lock catch 22 needs to be stopped at a desired position, it is only necessary to restrict the rotation of the transmission screw 41 at that position.

The sliding trajectory through-slot 111 includes a first inner wall 1111 and a second inner wall 1112 arranged opposite to each other. The guiding portion 212 includes a first limiting surface 2121 and a second limiting surface 2122 arranged opposite to each other. When the guiding portion 212 slides along the sliding trajectory through-slot 111, the first limiting surface 2121 abuts against the first inner wall 1111 to restrict rotation of the guiding portion 212, or the second limiting surface 2122 abuts against the second inner wall 1112 to restrict rotation of the guiding portion 212. By restricting the rotation of the guiding portion 212, rotation of the second shaft segment 322 is also restricted. This ensures the stability of the threaded connection between the second shaft segment 322 and the connecting hole 22141, thereby preventing the limiting member 3 from disengaging from the guiding assembly 2 and improving the reliability of the device.

The first limiting surface 2121 is configured as a flat surface, the second limiting surface 2122 is configured as a flat surface, and the first limiting surface 2121 and the second limiting surface 2122 are parallel to each other. Due to the flat design of the limiting surface, when the limiting surface abuts against the corresponding inner wall of the sliding trajectory through-slot 111, the guiding portion can slide along the sliding trajectory through-slot 111 and the rotation of the guiding portion 212 can be restricted. Moreover, the flat surface is easy to machine and facilitate assembly and connection between the guiding portion 212 and the sliding trajectory through-slot 111. The parallel arrangement facilitates smooth sliding of the guiding portion 212 along the sliding trajectory through-slot 111.

The guiding portion 212 further includes a first arc-shaped transition surface 2123 and a second arc-shaped transition surface 2124. Two ends of the first limiting surface 2121 are respectively connected to two ends of the second limiting surface 2122 via the first arc-shaped transition surface 2123 and the second arc-shaped transition surface 2124. The provision of the arc-shaped transition surfaces can avoid sharp features on the outer wall of the guiding portion 212, which can not only reduce wear on the inner walls of the sliding trajectory through-slot 111 caused by the outer wall of the guiding portion, but also prevent the guiding portion 212 from getting stuck in the sliding trajectory through-slot 111, thereby ensuring smooth sliding of the guiding portion 212 along the sliding trajectory through-slot 111.

The lock catch 22 includes a base 221 and a latching ring 222. The base 221 is provided with an accommodating groove 2210, and the transmission nut 42 is disposed in the accommodating groove 2210. The base 221 is provided with a second through-hole 2216 extending through the base 221 and communicating with the accommodating groove 2210. A diameter of the second through-hole 2216 is greater than an outer diameter of the transmission screw 41, and the transmission screw 41 passes through the base 221 via the second through-holes 2216. The guiding member 21 is connected to an outer wall of the accommodating groove 2210, and the latching ring 222 is connected to an outer wall at an end of the accommodating groove 2210 facing away from the guiding member 21.

Specifically, the guiding member 21 is further provided with an anti-rotation portion 213. The anti-rotation portion 213 is connected to a side of the main body portion 211 facing away from the guiding portion 212. An outer wall of the base 221 is provided with an anti-rotation groove (not indicated in the figure) engaging with the anti-rotation portion 213. In the case where the main body portion 211 is provided with a plurality of the anti-rotation portions 213, the base 221 is provided with a plurality of anti-rotation grooves, and the plurality of anti-rotation portions 213 and the plurality of anti-rotation grooves are in one-to-one correspondence. The provision of the anti-rotation portion 213 and the anti-rotation groove can prevent relative rotation between the guiding member 21 and the base 221.

The accommodating groove 2210 includes a bottom wall 2211, a first side wall 2212 connected to the bottom wall 2211, and a second side wall 2213 connected to the bottom wall 2211. The second through-hole 2216 passes through the first side wall 2212 and the second side wall 2213 arranged opposite to each other.

The transmission nut 42 is provided with two arc-shaped end surfaces 422 at two opposite ends of the transmission nut 42 in an axial direction of the transmission threaded hole 421, and the two arc-shaped end surfaces 422 respectively abut against the first side wall 2212 and the second side wall 2213. The transmission nut 42 includes a third limiting surface 423 opposite to the bottom wall 2211 and configured to restrict rotation of the transmission nut 42 about the axial direction of the transmission threaded hole 421.

Providing the two arc-shaped end surfaces 422 at the two opposite ends of the transmission nut 42 and abutting the two arc-shaped end surfaces 422 against the inner walls of the accommodating groove 2210 allows the shape of the transmission nut 42 to match that of the guiding portion 212, such that the transmission nut 42 can more effectively drive the base 221 to follow the motion of the guiding portion 212 along the trajectory defined by the sliding trajectory through-slot 111. Accordingly, the motion trajectory of the lock catch 22 can better fit the motion trajectory defined by the sliding trajectory through-slot 111, and thus better fit the arc-shaped motion trajectory of the vehicle seat backrest, so that the tolerance of the width of the relief slot can be further reduced, thereby further reducing the size of the relief slot and further reducing the impact on the interior trim. Moreover, by adopting the third limiting surface 423 on the transmission nut 42, when the transmission screw 41 tends to drive the transmission nut 42 to rotate, the third limiting surface 423 abuts against the bottom wall 2211 to restrict the rotation of the transmission nut 42, such that the transmission nut 42 can be driven to follow the motion trajectory defined by the sliding trajectory through-slot 111.

The accommodating groove 2210 further includes a third side wall 2214 connected to the bottom wall 2211 and a fourth side wall 2215 connected to the bottom wall 2211. The third side wall 2214 and the fourth side wall 2215 are arranged opposite to each other. The guiding member 21 is connected to a side of the third side wall 2214 facing away from the fourth side wall 2215, and the latching ring 222 is connected to a side of the fourth side wall 2215 facing away from the third side wall 2214. The connecting hole 22141 is provided in the third side wall 2214.

In this embodiment, the third limiting surface 423 is configured as a flat surface.

The seat backrest adjusting device further includes an elastic member 7. The elastic member 7 is disposed in the accommodating groove 2210, and two ends of the elastic member 7 are respectively connected to an inner wall of the accommodating groove 2210 and an outer wall of the transmission nut 42.

Since there is generally a certain fit clearance between the transmission threaded hole 421 and the transmission screw 41, the elastic member 7 enables single-side contact between the transmission nut 42 and the transmission screw 41 to eliminate the fit clearance. Thus, the motion trajectory of the transmission nut 42 can better fit the motion trajectory of the guiding portion 212, enabling the lock catch 22 to better fit the motion trajectory of the vehicle seat backrest, thereby reducing the size of the relief slot in the vehicle seat backrest and improving the aesthetic appearance of the interior trim.

It can be understood that the inner wall of the accommodating groove 2210 includes an inner wall of the bottom wall 2211, an inner wall of the first side wall 2212, an inner wall of the second side wall 2213, an inner wall of the third side wall 2214, and an inner wall of the fourth side wall 2215. An end of the elastic member 7 facing away from the transmission nut 42 may be connected to any one of the inner walls of the bottom wall 2211, the first side wall 2212, the second side wall 2213, the third side wall 2214, or the fourth side wall 2215.

The seat backrest adjusting device further includes a protective sleeve 8, and the protective sleeve 8 is fitted over the outer wall of the transmission nut 42. The protective sleeve 8 can reduce friction between the transmission nut 42 and the inner walls of the accommodating groove 2210, thereby protecting the transmission nut 42 and preventing abnormal friction-induced noise.

The protective sleeve 8 includes a sleeve body 81 matching the shape of the outer wall of the transmission nut 42, and spacer side plates 82 connected to the sleeve body 81 and configured to abut against the third side wall 2214 and the fourth side wall 2215. The spacer side plates 82 further define the position of the transmission nut 42.

The sleeve body 81 is provided with a fourth through-hole 811 for the transmission screw 41 to pass through.

It can be understood that when the transmission nut 42 is fitted with the protective sleeve 8, the arc-shaped end surfaces 422 of the transmission nut 42 abut against the inner walls of the accommodating groove 2210 via the protective sleeve 8, and the third limiting surface 423 of the transmission nut 42 abuts against the inner wall of the accommodating groove 2210 via the protective sleeve 8.

The present disclosure further provides a seat, and the seat includes the seat backrest adjusting device according to any one of the above embodiments.

The above described are merely preferred implementations of the present disclosure. It should be noted that several improvements and replacements can be made by those of ordinary skill in the art without departing from the technical principle of the present disclosure, but such improvements and replacements should also be deemed as falling within the protection scope of the present disclosure.

## Claims

1. A seat backrest adjusting device, comprising:
a mounting bracket, wherein the mounting bracket is provided with a sliding trajectory through-slot passing through the mounting bracket;
a guiding assembly, wherein the guiding assembly comprises a guiding member and a lock catch, the guiding member comprises a main body portion and a guiding portion, the guiding portion is fixedly connected to the main body portion, the guiding portion is slidably connected to the sliding trajectory through-slot, the guiding portion is provided with a first through-hole, the lock catch is connected to the main body portion, and the lock catch is provided with a connecting hole;
a limiting member, wherein the limiting member comprises a limiting portion and a connecting shaft, the connecting shaft passes through the first through-hole and the connecting hole, and the limiting portion is connected to the connecting shaft and is located on a side of the mounting bracket facing away from the main body portion; and
a transmission assembly, wherein the transmission assembly comprises a transmission screw and a transmission nut, the transmission nut is movably connected to the lock catch and is provided with a transmission threaded hole, and the transmission screw is threadedly connected to the transmission nut via the transmission threaded hole;
wherein, the transmission screw is configured to rotate about an axis of the transmission screw to drive the transmission nut to move along the transmission screw, whereby the lock catch is driven to move, and the guiding portion slides along the sliding trajectory through-slot.

2. The seat backrest adjusting device according to claim 1, wherein the sliding trajectory through-slot is of an arc-shaped trajectory configuration; and
an inner wall of the connecting hole is provided with an internal thread, the connecting shaft comprises a first shaft segment and a second shaft segment, a diameter of the first shaft segment is greater than a diameter of the second shaft segment, the first shaft segment is connected to the limiting portion and passes through the first through-hole, the second shaft segment is provided with an external thread engaging with the internal thread, and the second shaft segment is connected to an end of the first shaft segment facing away from the limiting portion and is threadedly connected to the connecting hole.

3. The seat backrest adjusting device according to claim 2, wherein the limiting portion is of a disk-shaped configuration, and a diameter of the limiting portion is greater than a width of the sliding trajectory through-slot.

4. The seat backrest adjusting device according to claim 2, wherein the sliding trajectory through-slot comprises a first inner wall and a second inner wall arranged opposite to each other, and the guiding portion comprises a first limiting surface and a second limiting surface arranged opposite to each other; and
in response to that the guiding portion slides along the sliding trajectory through-slot, the first limiting surface abuts against the first inner wall to restrict rotation of the guiding portion, or the second limiting surface abuts against the second inner wall to restrict rotation of the guiding portion.

5. The seat backrest adjusting device according to claim 4, wherein the first limiting surface is configured as a flat surface, the second limiting surface is configured as a flat surface, and the first limiting surface and the second limiting surface are parallel to each other.

6. The seat backrest adjusting device according to claim 5, wherein the guiding portion further comprises a first arc-shaped transition surface and a second arc-shaped transition surface, and two ends of the first limiting surface are respectively connected to two ends of the second limiting surface via the first arc-shaped transition surface and the second arc-shaped transition surface.

7. The seat backrest adjusting device according to any one of claims 2 to 6, wherein the lock catch comprises a base and a latching ring, the base is provided with an accommodating groove, the transmission nut is disposed within the accommodating groove, the base is provided with a second through-hole extending through the base and communicating with the accommodating groove, a diameter of the second through-hole is greater than an outer diameter of the transmission screw, the transmission screw passes through the base via the second through-holes, the guiding member is connected to an outer wall of the accommodating groove, and the latching ring is connected to an outer wall at an end of the accommodating groove facing away from the guiding member.

8. The seat backrest adjusting device according to claim 7, wherein the accommodating groove comprises a bottom wall, a first side wall connected to the bottom wall, and a second side wall connected to the bottom wall, and the second through-hole passes through the first side wall and the second side wall arranged opposite to each other; and
two opposite ends of the transmission nut in an axial direction of the transmission threaded hole are each provided with an arc-shaped end surface, the two arc-shaped end surfaces respectively abut against the first side wall and the second side wall, and the transmission nut comprises a third limiting surface opposite to the bottom wall and configured to restrict rotation of the transmission nut about the axial direction of the transmission threaded hole.

9. The seat backrest adjusting device according to claim 7, further comprising an elastic member, wherein the elastic member is disposed within the accommodating groove, and two ends of the elastic member are respectively connected to an inner wall of the accommodating groove and an outer wall of the transmission nut.

10. A seat, wherein the seat comprises the seat backrest adjusting device according to any one of claims 1 to 10.
